(19) Europäisches Patentamt

European Patent Office

Office européen des brevets

(11) **EP 3 889 823 A1**

(12) **EUROPEAN PATENT APPLICATION**

(43) Date of publication:
06.10.2021 Bulletin 2021/40

(51) Int Cl.:
*G06F 40/258* (2020.01)      *G06N 20/00* (2019.01)
*G06K 9/00* (2006.01)      *G06N 5/02* (2006.01)
*G06N 3/04* (2006.01)

(21) Application number: 21164267.3

(22) Date of filing: 23.03.2021

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority:   31.03.2020   CN 202010247461

(71) Applicant: **Beijing Baidu Netcom
Science and Technology Co., Ltd.
Beijing 100085 (CN)**

(72) Inventors:
• **ZHANG, Zhen
  Beijing, 100085 (CN)**
• **ZHANG, Yipeng
  Beijing, Beijing 100085 (CN)**
• **LIU, Minghao
  Beijing, Beijing 100085 (CN)**
• **GUO, Jiangliang
  Beijing, Beijing 100085 (CN)**

(74) Representative: **Studio Torta S.p.A.
Via Viotti, 9
10121 Torino (IT)**

(54) **METHOD AND APPARATUS FOR CONSTRUCTING DOCUMENT HEADING TREE, ELECTRONIC DEVICE AND STORAGE MEDIUM**

(57)     A method and apparatus for constructing a document heading tree, an electronic device and a storage medium are provided. The method includes: performing a rule matching between a text feature of each of paragraphs in a document to be processed and a paragraph feature in a predefined rule, according to the predefined rule; determining a paragraph level of each of the paragraphs in the document to be processed according to a result of the rule matching, in a case where the rule matching is successful; determining a paragraph level of each of the paragraphs in the document to be processed using a machine learning model, in a case where the rule matching is failed; and constructing a document heading tree of the document to be processed based on the paragraph level of each of the paragraphs.

FIG. 1

**EP 3 889 823 A1**

**Description**

TECHNICAL FIELD

The present disclosure can be applied to the field of computer technology, and particularly, to the field of artificial intelligence.

BACKGROUND

In the existing technology, a document heading recognition usually uses a method based on typesetting format comparison and syntax comparison. The method based on typesetting format comparison mainly predefines a template rule of typesetting format to compare a relationship between a document to be processed and the template rule, and then completes a heading recognition. The method based on syntax comparison firstly defines a tree or graph representing a grammatical relation, then constructs a syntactic structure of a document heading, and compares whether a paragraph in the document to be processed is consistent with the syntactic structure of the document heading, thus completing a heading recognition. However, there are many non-normative phenomena during writing of many documents at present, e.g., the outline hierarchy is not set, the outline hierarchy is set incorrectly, the heading format is wrong, etc., which all lead to the difficulty in document heading recognition. Thus, adopting the above methods may bring the problem of a low fault tolerance.

SUMMARY

A method and apparatus for constructing a document heading tree, an electronic device and a storage medium are provided according to embodiments of the present disclosure, so as to solve at least one of the above technical problems in the existing technology.

In a first aspect, a method for constructing a document heading tree is provided according to an embodiment of the present disclosure, which includes:

performing a rule matching between a text feature of each of paragraphs in a document to be processed and a paragraph feature in a predefined rule, according to the predefined rule;
determining a paragraph level of each of the paragraphs in the document to be processed according to a result of the rule matching, in a case where the rule matching is successful;
determining a paragraph level of each of the paragraphs in the document to be processed using a machine learning model, in a case where the rule matching is failed; and
constructing a document heading tree of the document to be processed based on the paragraph level of each of the paragraphs.

In a second aspect, an apparatus for constructing a document heading tree is provided according to an embodiment of the present disclosure, which includes:

a matching unit configured to perform a rule matching between a text feature of each of paragraphs in a document to be processed and a paragraph feature in a predefined rule, according to the predefined rule;
a first determination unit configured to determine a paragraph level of each of the paragraphs in the document to be processed according to a result of the rule matching, in a case where the rule matching is successful;
a second determination unit configured to determine a paragraph level of each of the paragraphs in the document to be processed using a machine learning model, in a case where the rule matching is failed; and
a construction unit configured to construct a document heading tree of the document to be processed based on the paragraph level of each of the paragraphs.

In a third aspect, an electronic device is provided according to an embodiment of the present disclosure, which includes:

at least one processor; and
a memory communicatively connected to the at least one processor; wherein
the memory stores instructions executable by the at least one processor, the instructions, when executed by the at least one processor, cause the at least one processor to perform the method according to any one of the embodiments of the present disclosure.

In a fourth aspect, a non-transitory computer readable storage medium is provided according to an embodiment of the present disclosure, which stores computer instructions, wherein the computer instructions, when executed by a computer, cause the computer to execute the method according to any one of the embodiments of the present disclosure.

One embodiment in the present disclosure has the following advantages or beneficial effects: it is suitable for the heading recognition of various unstructured documents and the construction of the document heading tree, and has a strong fault tolerance based on the combination of the predefined rule and the machine learning model, so that the recognition result is more accurate.

Other effects of the alternative manners of the present disclosure will be explained as follows in conjunction with specific embodiments.

BRIEF DESCRIPTION OF DRAWINGS

The accompanying drawings are provided for better understanding of the solution, rather than limiting the present disclosure, wherein

FIG 1 is a flowchart of a method for constructing a document heading tree according to an embodiment of the present disclosure;

FIG 2 is a schematic diagram of a document heading tree obtained based on a method for constructing a document heading tree according to an embodiment of the present disclosure;

FIG 3 is a flowchart of paragraph level recognition in a method for constructing a document heading tree according to an embodiment of the present disclosure;

FIG 4 is a flowchart of paragraph level determination using a machine learning model in a method for constructing a document heading tree according to an embodiment of the present disclosure;

FIG 5 is a flowchart of document heading tree construction in a method for constructing a document heading tree according to an embodiment of the present disclosure;

FIG 6 is a schematic diagram of document heading tree merging in a method for constructing a document heading tree according to an embodiment of the present disclosure;

FIG 7 is a flowchart of a method for constructing a document heading tree according to an embodiment of the present disclosure;

FIG 8 is a schematic diagram of an apparatus for constructing a document heading tree according to an embodiment of the present disclosure;

FIG 9 is a schematic diagram of a construction unit of an apparatus for constructing a document heading tree according to another embodiment of the present disclosure; and

FIG 10 is a block diagram of an electronic device for implementing a method for constructing a document heading tree according to an embodiment of the present disclosure.

DETAILED DESCRIPTION OF EMBODIMENTS

Exemplary embodiments of the present disclosure are described below with reference to the accompanying drawings, including various details of the embodiments of the present disclosure to facilitate the understanding, and which should be considered as merely exemplary. Thus, it should be realized by those of ordinary skill in the art that various changes and modifications can be made to the embodiments described herein without departing from the scope and spirit of the present disclosure. Also, for the sake of clarity and conciseness, the contents of well-known functions and structures are omitted in the following description.

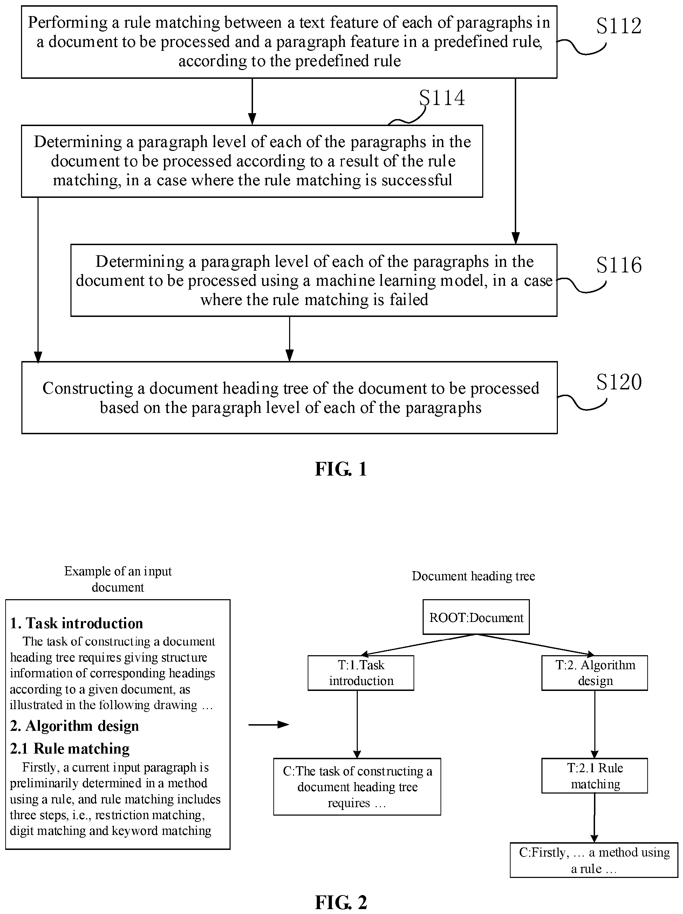

FIG 1 is a flowchart of a method for constructing a document heading tree according to an embodiment of the present disclosure. Referring to FIG 1, the method for constructing a document heading tree includes:

S112: performing a rule matching between a text feature of each of paragraphs in a document to be processed and a paragraph feature in a predefined rule, according to the predefined rule;

S114: determining a paragraph level of each of the paragraphs in the document to be processed according to a result of the rule matching, in a case where the rule matching is successful;

S116: determining a paragraph level of each of the paragraphs in the document to be processed using a machine learning model, in a case where the rule matching is failed; and

S120: constructing a document heading tree of the document to be processed based on the paragraph level of each of the paragraphs.

The embodiment of the present disclosure is applicable to the heading recognition for various unstructured documents and the construction of the document heading tree. The unstructured documents may include a Word document, a Hyper Text Markup Language (HTML) document, an Optical Character Recognition (OCR) conversion document, etc. Such kind of document is composed of several basic units, each of which has a different role (e.g., a heading, a main body, etc.) in the article. Generally, a paragraph is a basic unit of a text. The construction of a document heading tree is to recognize a heading in a document and build a heading tree according to a recognition result. By using the document heading tree, information contained in the document can be effectively mined, which is the basis of many applications (such as typesetting format checking). In addition, the construction of the document heading tree is also important in some natural language processing applications, such as document classification, structured retrieval, document understanding, etc.

The task of constructing a document heading tree requires that the structured information of corresponding heading in a document to be processed should be given according to the given document to be processed. By determining the order of occurrence and the nested structure of various paragraphs in the document to be processed, a rule syntax tree is finally formed, which is also a document heading tree that represents the document heading(s) and hierarchical levels of a document main body. FIG 2 is a schematic diagram of a document heading tree obtained based on a method for constructing a document heading tree according to an embodiment of the present disclosure. FIG 2 illustrates a document heading tree reconstructed according to an input document as an example. "ROOT" in FIG 2 is a virtual root node, which represents a document itself. "T" in FIG 2 is a heading node. "C" in FIG 2 is a document main body node, which is generally a leaf node.

Taking a word document as an example, in a case where an outline hierarchy is set correctly in a word document, a document heading tree can be exported using a word document parsing tool such as Apache POI, Libreoffice, etc. However, in a case where the document is not written normatively, the document heading tree cannot be constructed.

In view of the above problem, the present disclosure proposes a method for constructing a heading tree suitable for unstructured documents. In the embodiment of the present disclosure, a predefined rule-based rule matching and a machine learning model are adopted to recognize a paragraph role of at least one paragraph in a document to be processed, i.e., to recognize whether each of the paragraphs in the document to be processed is a heading. Further, the paragraph level of each of the paragraphs can also be determined. For example, in the example of FIG. 2, "T: 2.Algorithm Design" is a primary-level heading, and "T: 2.1 Rule Matching" is a secondary-level heading. In S120, a document heading tree is constructed based on the paragraph levels of the respective paragraphs obtained in S114 or S116. Referring to the example in FIG. 2, the constructed document heading tree can clearly describe the leveled nesting relationships among paragraphs of the document.

In S112, firstly, the predefined rule-based rule matching method is used to perform a heading recognition for each of the paragraphs in a document to be processed. Specifically, a rule matching may be performed for a text feature of each of the paragraphs in the document to be processed and a paragraph feature in the predefined rule. In a case where the rule matching is successful, S114 is performed to determine a paragraph level of each of the paragraphs in the document to be processed according to a result of the rule matching. For example, the paragraph feature in the predefined rule includes that the paragraph text contains a predetermined punctuation mark such as a comma or a period. In a case where it is recognized that the current paragraph in the document to be processed contains a predetermined punctuation mark such as a comma or a period, the paragraph level of the current paragraph is recognized as a document main body. In a case where the rule matching is failed, S116 is performed to determine the paragraph level of each of the paragraphs in the document to be processed using a machine learning model. For example, a Long Short-Term Memory (LSTM) model may be adopted to recognize the paragraph level of each of the paragraphs in the document to be processed.

In the above embodiment, the predefined rule-based rule matching is combined with the machine learning model to perform a heading recognition for each of the paragraphs in the document to be processed, so as to obtain the paragraph level of each of the paragraphs. The method of combining the predefined rule-based rule matching with the machine learning model can determine the paragraph levels of the respective paragraphs from multiple perspectives, which gets rid of the insufficient fault tolerance when comparing only with the template rule, and improves the ability of heading recognition.

In another implementation, one of the predefined rule-based rule matching and the machine learning model may be adopted to perform heading recognition for each of the paragraphs in the document to be processed, so as to obtain the paragraph level of each of the paragraphs. Next, the document heading tree is constructed according to the paragraph level of each of the paragraphs, so as to show the leveled nesting relationship between the paragraphs of the whole document.

Regarding the method based on typesetting format comparison in the existing technology, a similarity between the template and the document to be processed needs to be calculated during the heading recognition, and the relationship between the document to be processed and a heading in the template is determined from a magnitude of the similarity. If the typesetting format of the document to be processed is non-normative, it is difficult to recognize the heading by the magnitude of the similarity. The same problem exists in the method based on syntax comparison in the existing technology, and if the syntax format of the document to be processed is non-normative, the heading recognition also cannot be performed. At present, there are many non-normative phenomena during writing process of many documents, e.g., the outline hierarchy is not set, the outline hierarchy is set incorrectly, the heading format is wrong, etc., which all lead to the difficulty in heading recognition of the document.

In view of the above problem, a method for constructing a document heading tree is provided according to an embodiment of the present disclosure, which is suitable for the heading recognition of various unstructured documents and the construction of the document heading tree, and has a strong fault tolerance based on the combination of the predefined rule and the machine learning model, so that the recognition result is more accurate.

In the embodiment of the present disclosure, the paragraph level may include the document main body and the heading level of the document heading, wherein the heading level of the document heading may include a series of headings ranked from high to low, such as a primary-level heading, a secondary-level heading, a third-level heading, etc. In the example of FIG. 2, "C" is a document main body node, "T: 2. Algorithm Design" is a primary-level heading, and "T: 2.1 Rule Matching" is a secondary-level heading.

In one implementation, a weight value corresponding to each of the paragraph levels may be preset, wherein the smaller the weight value, the higher the corresponding heading level is, and a maximum weight value is corresponding to the document main body. For example, in the example of FIG. 2, the node "T: 2. Algorithm Design" representing a primary-level heading may be assigned with a weight value of 1, the node "T: 2.1 Rule Matching" representing a secondary-level heading may be assigned with a weight value of 2, and the node "C" representing a document main body may be assigned with a weight value of 100.

In the embodiment of the present disclosure, the predefined rule-based rule matching method may include at least one of a heading format restriction based on a document main body feature, heading digit matching and keyword matching. The specific implementations of the above methods are as follows:

1) Heading format restriction based on a document main body feature

In one embodiment, the paragraph feature(s) in the predefined rule may include one or more document main body features. The one or more document main body features may include: a predetermined punctuation contained in a paragraph text, a predetermined paragraph length threshold, a predetermined character contained in the paragraph text, the paragraph text containing no character other than digits, etc.

In one implementation, S114 in FIG. 1, i.e., determining a paragraph level of each of the paragraphs in the document to be processed according to a result of the rule matching, in a case where the rule matching is successful specifically may include: determining a paragraph level of a current paragraph as a document main body, in a case where the current paragraph in the document to be processed is successfully matched with the document main body feature.

Generally, the heading paragraph of the document has special heading format restrictive conditions. For example, the heading does not contain a punctuation mark, the heading content has a length limit, and special characters such as "formula" will not occur in the heading. Based on the above characteristics, the content of the current paragraph to be processed can be checked according to the above heading format restrictive conditions. If the above heading format restrictive conditions are satisfied, the paragraph is recognized as a non-heading paragraph, that is, a document main body, and assigned with a weight value of 100. In an example, the heading format restrictive conditions are shown in Table 1.

Table 1 Heading Format Restrictive Conditions

| Restrictive Conditions | Descriptions |
| --- | --- |
| Punctuation mark restriction | A paragraph is recognized as a non-heading paragraph if a character such as . , ! or ? occurs therein. |
| Text length restriction | A paragraph is recognized as a non-heading paragraph if the length thereof is not within an interval of [min, max], where min and max may be determined according to the actual situation. |
| Special symbol restriction | A paragraph is recognized as a non-heading paragraph if a formula or the like occurs therein. |
| Content format restriction | A paragraph is recognized as a non-heading paragraph if the whole paragraph is merely of digits. |

According to the embodiment of the present disclosure, a paragraph with an obvious document main body feature can be recognized as a document main body, and on the basis of accurate recognition, the document structure can be clearly displayed in the document heading tree constructed subsequently.

2) Heading digit matching

In one embodiment, the paragraph feature in the predefined rule may include a format of a digital symbol preceding the heading content of the document heading.

In S114 in FIG. 1, determining a paragraph level of each of the paragraphs in the document to be processed according to a result of the rule matching, in a case where the rule matching is successful specifically may include:

in a case where it is recognized that a digital symbol precedes a heading content of a document heading, obtaining a heading level set composed of respective heading levels based on a sample document, and obtaining regular expressions of formats of digital symbols corresponding to the respective heading levels; and

matching the format of the digital symbol preceding the heading content in a current paragraph with the regular expressions corresponding to the respective heading levels, and determining a heading level of the current paragraph according to a matching result.

In this implementation, the heading level may be determined using the format of the digital symbol preceding the heading content. For example, sample documents used in various scenarios can be collected in advance. Next, a plurality of heading paragraphs starting with digits are extracted from the sample documents, and various formats of digital symbols are obtained from the heading paragraphs. In Table 2 below for details, "Chapter I", "(1.1)", etc. are examples of the formats of the digital symbols.

Further, various formats of the digital symbols obtained from the sample documents may be expressed in regular expressions, as shown in Table 2. Different formats of digital symbols represent different heading levels, which are corresponding to different weight values, so a weight value corresponding to each regular expression can be obtained. The third column in Table 2 shows weight values corresponding to various formats of digital symbols. For example, "Chapter I" is probably a primary-level heading, with a corresponding heading weight value of 1, and "(1. 1)" is probably a secondary-level heading, with a corresponding heading weight value of 5. Table 2 is a general table summarized from the sample documents in advance. Table 2 shows that different formats of digital symbols are assigned with different weight values, wherein the smaller the weight value, the higher the corresponding heading level is.

Table 2. Heading Digit Matching Table

| Examples | Regular expressions | Heading weight values |
|---|---|---|
| Chapter I | (Part\|Chapter\|Section) +(I\|II\|III\|IV\|V\|VI\|VII\|VIII\|IX\|X\|1\|2\|3\|4\|5\|6\|7\|8\|9\|0) | 1 |
| I | I\|II\|III\|IV\|V\|VI\|VII\|VIII\|IX\|X | 2 |
| I. | I\|II\|III\|IV\|V\|VI\|VII\|VIII\|IX\|X)+(,\|\.\|\)\|) | 2 |
| (I) | (\(\|()(I\|H\|IH\|IV\|V\|VI\|VIIIVIII\|IX\|X)+(\)\|)) | 3 |
| (1) | (\(\|()(1\|2\|3\|4\|5\|6\|7\|8\|9\|0)+(\)\|)) | 4 |
| (1.1) | (1\|2\|3\|4\|5\|6\|7\|8\|9\|0)+(,\|\.) | 5 |
| 1) | (1\|2\|3\|4\|5\|6\|7\|8\|9\|0)+(\)\|)) | 6 |

On the basis of the above table data, a format of a digital symbol preceding a heading content in a current paragraph may be matched with regular expressions corresponding to respective heading levels by regular matching, in a case where it is recognized that the digital symbol precedes the heading content of the document heading. If the current paragraph meets the above regular matching conditions, the heading weight value is output, and the program ends the recognition.

According to the embodiment of the present disclosure, a heading level of each of the paragraphs can be accurately recognized through the regular expressions of the formats of the digital symbols. That is, the general heading digit matching table can be summarized in the above method, and tables suitable for personalized applications can also be summarized for specific scenarios, which has a strong operability and a high accuracy.

3) Keyword matching

In one implementation, the paragraph feature in the predefined rule may include a keyword set, which includes a blacklist and a whitelist, wherein the whitelist includes a keyword which is included in the document heading, and the blacklist includes a keyword which is not included in the document heading.

Determining a paragraph level of each of the paragraphs in the document to be processed according to a result of the rule matching, in a case where the rule matching is successful includes:

matching a text of a current paragraph with the keyword set;
determining a paragraph level of the current paragraph as a preset heading level corresponding to the whitelist, in a case where the text of the current paragraph is successfully matched with the whitelist; and
determining the paragraph level of the current paragraph as a document main body, in a case where the text of the current paragraph is successfully matched with the blacklist.

The content of the document heading represents a central idea of a whole sub-chapter, and whether it is a document heading may be determined through specific keywords. For example, a paragraph containing the keywords such as "basic information", "background introduction", "method introduction", etc. is probably a document heading. In the embodiment of the present disclosure, a whitelist and a blacklist may be predefined for determination of the content of the paragraph, as shown in Table 3. The weight values corresponding to the whitelist and the blacklist are further shown in a third column of Table 3. In a case where the text of the current paragraph is successfully matched with the blacklist, the paragraph level of the current paragraph is determined as the document main body, and the corresponding weight value of the current paragraph may be set to 100. In a case where the text of the current paragraph is successfully matched with the whitelist, the paragraph level of the current paragraph is determined as the document heading. In one implementation, all the corresponding weight values of the document paragraphs successfully matched with the whitelist may be set to a first predetermined value such as 2.

Table 3. Keyword Matching Table

| List | Description | Weight value |
| --- | --- | --- |
| Whitelist | Heading keywords, such as "basic information" | 2 |
| Blacklist | Words that can't be used as headings, such as "has", "before" | 100 |

In the embodiment of the present disclosure, the list can be freely adapted according to the actual demand, and can be extended and updated at any time as needed. This manner can be flexibly applied according to the scenarios and demands, and has good extensibility.

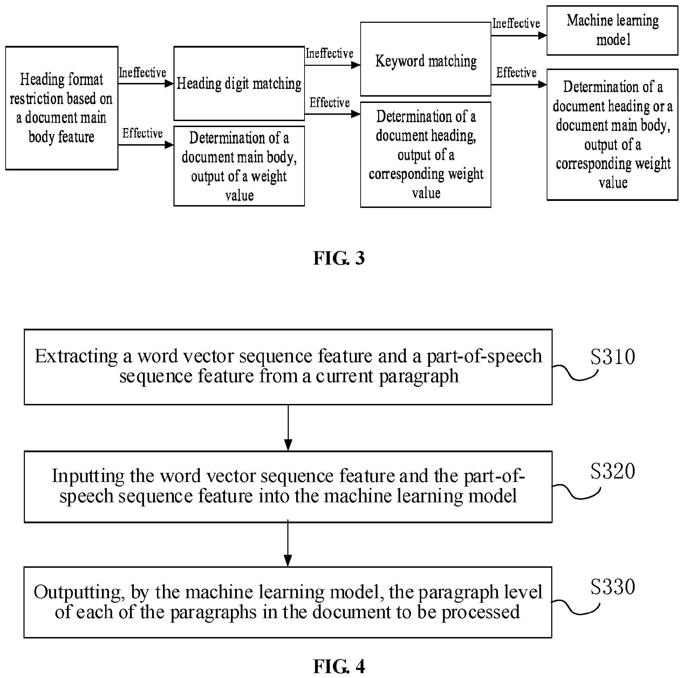

As described above, in the embodiment of the present disclosure, the predefined rule-based rule matching method may include at least one of a heading format restriction based on a document main body feature, heading digit matching and keyword matching. In an example, the above predefined rule-based rule matching can be combined to further improve the accuracy of heading recognition. FIG. 3 is a flowchart of paragraph level recognition in a method for constructing a document heading tree according to an embodiment of the present disclosure. As illustrated in FIG 3, the document paragraph may be recognized by the heading format restriction based on the document main body feature. If the recognition by the heading format restriction is effective, the document paragraph is determined as the document main body and the weight value is output. If the recognition by the heading format restriction is ineffective, the document paragraph is recognized by the heading digit matching. If the recognition by the heading digit matching is effective, the document paragraph is determined as a document heading and a corresponding weight value is output. If the recognition by the heading digit matching is ineffective, the document paragraph is recognized by the keyword matching. If the recognition by the keyword matching is effective, the document paragraph is determined as a document main body or a document heading, and a corresponding weight value is output. If the recognition by the keyword matching is ineffective, the document paragraph is recognized using the machine learning model, and finally a weight value corresponding to the document paragraph is output. According to the embodiment of the present disclosure, the paragraph role is recognized from multiple perspectives by the predefined rule and the machine learning model with respect to the feature of the document paragraph heading, which can ensure the recognition accuracy.

FIG. 4 is a flowchart of paragraph level determination using a machine learning model in a method for constructing a document heading tree according to an embodiment of the present disclosure. Referring to FIG. 1 and FIG. 4, determining a paragraph level of each of the paragraphs in the document to be processed using a machine learning model, in a case where the rule matching is failed specifically may include:

S310: extracting a word vector sequence feature and a part-of-speech sequence feature from a current paragraph;
S320: inputting the word vector sequence feature and the part-of-speech sequence feature into the machine learning model; and
S330: outputting, by the machine learning model, the paragraph level of each of the paragraphs in the document to be processed.

In an example, the machine learning model may be adopted to make a binary-classification determination for the current paragraph, i.e., to determine whether the current paragraph is a document heading.

Since the document heading text is generally embodied as a summary statement in content, on the one hand, a word vector sequence may be used as a feature to extract semantic information, wherein a word vector is a technology that processes a word into a vector, and ensures that the relative similarity and semantic similarity between the vectors are related, and wherein the word vector is a vector obtained by mapping a word into a semantic space. On the other hand, the document heading text also has corresponding characteristics in the part-of-speech, and it is usually a combination of a noun and a gerund, such as "experiences summarizing" and "rules generalizing". Therefore, a part-of-speech sequence may be added as an input feature of the machine learning model at the same time, so that the machine learning model can learn using the word vector sequence feature and the part-of-speech sequence feature.

In S310, word segmentation processing is performed on the current paragraph to be input into the machine learning model, to obtain the word vector sequence feature and the part-of-speech sequence feature of the current paragraph. The above features are input into the machine learning model in S320. In one example, the LSTM model may be adopted to determine the paragraph level of each of the paragraphs in the document to be processed. The determination formula of the LSTM model is as follows:

$$y = LSTM(x\_emb, x\_pos)$$

wherein x_emb represents a word vector sequence feature after word segmentation, x_pos represents a part-of-speech sequence feature after word segmentation, and y represents a final output result; wherein in a case where y is 1, it represents a prediction result indicating that the current paragraph is a document heading. In one implementation, corresponding weight values of document paragraphs recognized as headings by the LSTM model may be all set to a second predetermined value, such as 7; and in a case where y is 0, it represents a prediction result indicating that the current paragraph is not a document heading and assigned with a weight value of 100.

The machine learning model adopted in the embodiment of the present disclosure has natural advantages in dealing with problems related to sequence features. The machine learning model is configured to learn the word vector sequence feature and the part-of-speech sequence feature, to obtain a convergent model for prediction, so as to achieve an ideal prediction effect.

In one implementation, in S120 in FIG. 1, constructing a document heading tree of the document to be processed based on the paragraph level of each of the paragraphs includes:

creating a root node of the document heading tree, and assigning a paragraph level corresponding to the root node as a highest level; and
adding a paragraph node corresponding to each of the paragraphs into the document heading tree according to the paragraph level of each of the paragraphs in the document to be processed.

As described above, the root node in the document heading tree represents the document itself. Firstly, the root node may be created, and since the paragraph level corresponding to the root node is assigned as the highest level, the root node is correspondingly assigned with a minimum weight value. For example, the root node may be assigned with a weight value of 0. Then, a paragraph node corresponding to each of the paragraphs in the document to be processed is added into the document heading tree. In the steps described above, the paragraph level of each of the paragraphs in the document to be processed has been recognized, and the weight value corresponding to each of the paragraphs can be obtained. According to the weight value, a paragraph node corresponding to each of the paragraphs may be added into the document heading tree, to construct a sorting tree. In the sorting tree, the weight value of the root node is smallest, a child node of the root node is a node corresponding to the primary-level heading, a child node of the node corresponding to the primary-level is a node corresponding to the secondary-level heading, and so on, until a bottom-level leaf node corresponds to the document main body.

The embodiment of the present disclosure can obtain a document heading tree with a hierarchical structure, and is suitable for various unstructured documents, such as a word document, a txt document, an html document, etc. The generated heading tree can be used to effectively mine the information contained in the document, and it is the basis of many applications such as typesetting format check, document classification, structured retrieval and document understanding.

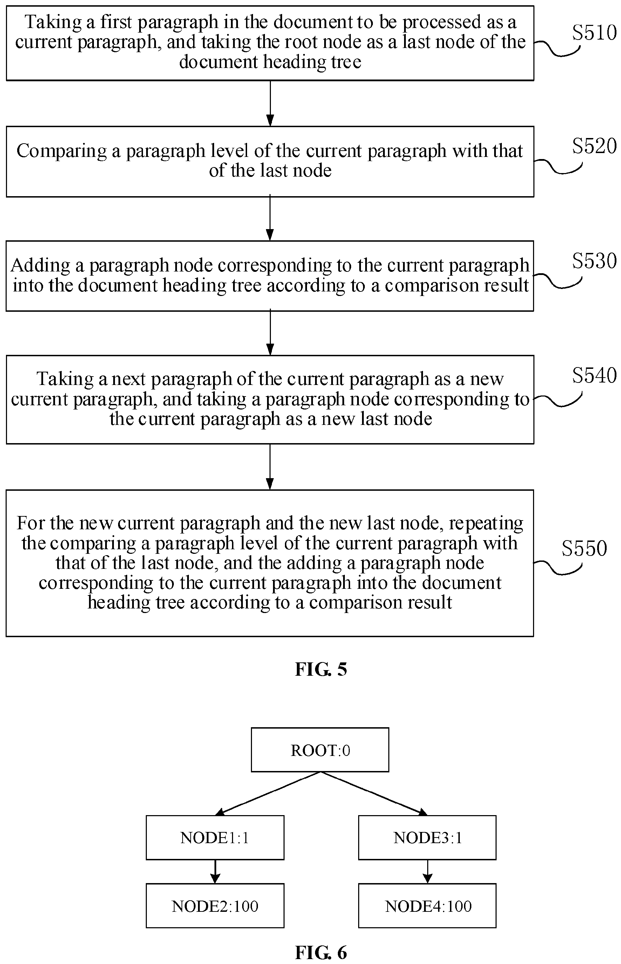

FIG. 5 is a flowchart of document heading tree construction in a method for constructing a document heading tree according to an embodiment of the present disclosure. As illustrated in FIG. 5, in one implementation, adding a paragraph node corresponding to each of the paragraphs into the document heading tree according to the paragraph level of each of the paragraphs in the document to be processed may include:

> S510: taking a first paragraph in the document to be processed as a current paragraph, and taking the root node as a last node of the document heading tree;
> S520: comparing a paragraph level of the current paragraph with that of the last node;
> S530: adding a paragraph node corresponding to the current paragraph into the document heading tree according to a comparison result;
> S540: taking a next paragraph of the current paragraph as a new current paragraph, and taking a paragraph node corresponding to the current paragraph as a new last node; and
> S550: for the new current paragraph and the new last node, repeating the comparing a paragraph level of the current paragraph with that of the last node, and the adding a paragraph node corresponding to the current paragraph into the document heading tree according to a comparison result.

According to the embodiment of the present disclosure, a document heading tree with a hierarchical structure is constructed using a loop structure, and the constructed document heading tree can clearly describe the leveled nesting relationship among paragraphs of the document, so that the whole document is structured, thereby overcoming the problem that it is difficult to process the unstructured document and mine information therefrom.

In one implementation, in S530, adding a paragraph node corresponding to the current paragraph into the document heading tree according to a comparison result specifically may include:

> in a case where the paragraph level of the current paragraph is higher than that of the last node, taking a parent node of the last node as a new last node, and repeating the comparing a paragraph level of the current paragraph with that of the last node; and
> in a case where the paragraph level of the current paragraph is lower than that of the last node, taking a paragraph node corresponding to the current paragraph as a child node of the last node.

According to the embodiment of the present disclosure, a paragraph node corresponding to a current paragraph is inserted into the document heading tree through comparison layer by layer, and finally an orderly sorted document heading tree is constructed, which provides a reliable basis for the subsequent applications, such as document inspection, document retrieval, document understanding and information mining.

In the embodiment of the present disclosure, in order to obtain the hierarchical relationship of the document heading tree, a position where a node is merged into a document heading tree is determined by comparing a weight value corresponding to a document heading of a current paragraph. An exemplary construction process is as follows:

> 1) a new document root node is created, to which a weight value of 0 is assigned;
> 2) a document paragraph set is traversed, a weight value corresponding to the current paragraph input is determined, and a new node corresponding to the current paragraph is created according to the weight value;
> 3) the weight value of the last node of the document heading tree is compared with that of the current paragraph node, wherein in an initial state, a first paragraph in the document to be processed is taken as the current paragraph, and the root node is taken as the last node of the document heading tree. The current paragraph and the last node can be redetermined in each of the following loops.

The specific comparison method is as follows: if the weight value of the current paragraph node is less than that of the last node of the document heading tree, the paragraph level of the current paragraph is higher than that of the last node. Then, a parent node of the last node is taken as a new last node, to continue comparison between the weight value of the parent node of the last node and the weight value of the current paragraph node, and so on, until the weight value of the last node is less than that of the current paragraph node. According to a comparison result, the current paragraph node is merged into the document heading tree.

FIG. 6 is a schematic diagram of document heading tree merging in a method for constructing a document heading tree according to an embodiment of the present disclosure. As illustrated in FIG 6, in the current heading tree, "ROOT: 0" represents a root node; "NODE1: 1" means that a weight value of a node NODE1 is 1; "NODE3:1" means that a weight value of a node NODE3 is 1; "NODE2:100" means that a weight value of a node NODE2 is 100; "NODE4:100" means that a weight value of a node NODE4 is 100. Assuming that a weight value of a paragraph node NODE5 that needs to be merged at present is 3, and a last node merged into the document heading tree before NODE5 is NODE4, then firstly, the weight value of the last node NODE4 of the document heading tree is compared with that of NODE5; since the weight value 100 of NODE4 is greater than the weight value 3 of NODE5, the weight value of the parent node NODE3 of NODE4 is compared with that of NODE5. Because the weight value of NODE3 is less than that of NODE5, the comparison ends, and NODE5 is merged into the tree, i.e., the parent node of NODE5 points to NODE3, and NODE3 is added with a child node NODE5.

4) It is determined whether all paragraphs in the document paragraph set have been merged, and if so, the program ends, otherwise, steps 2) and 3) are repeated.

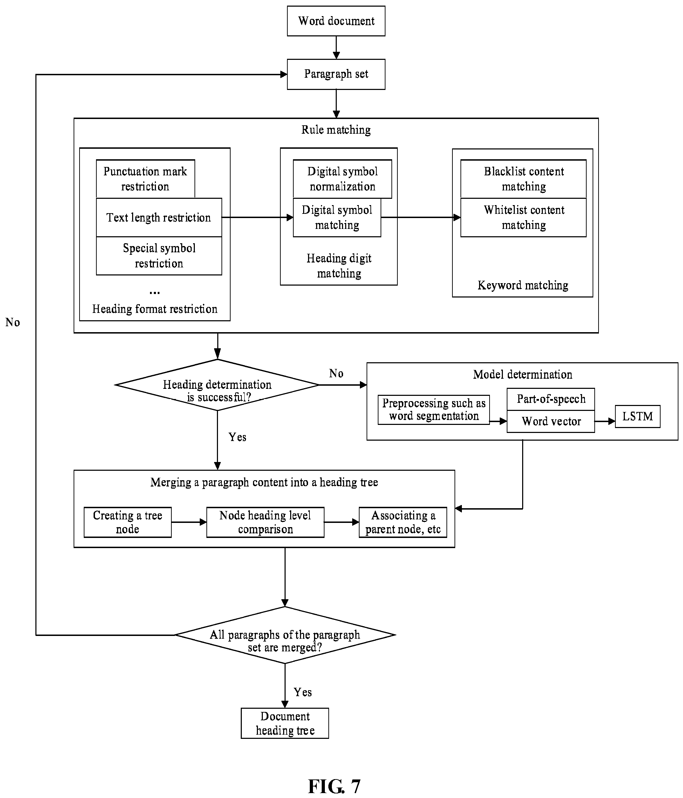

FIG. 7 is a flowchart of a method for constructing a document heading tree according to an embodiment of the present disclosure. As illustrated in FIG. 7, a word document to be processed is split into a paragraph set, and firstly, paragraph recognition is performed using the predefined rule-based rule matching method, wherein the rule matching includes heading format restriction, heading data matching and keyword matching. If the rule matching is failed, the paragraph recognition is performed in a model determination method. For example, an LTSM model may be specifically adopted to perform the paragraph recognition by learning the part-of-speech feature and the word vector feature. If the rule matching is successful, the paragraph content is merged into the document heading tree, and the specific steps may include creating a root node, node heading level comparison and associating a parent node. The construction of the document heading tree is completed in a case where all paragraphs of the paragraph set are merged. The specific method and implementation of the above process have been described as above, and will not be repeated here.

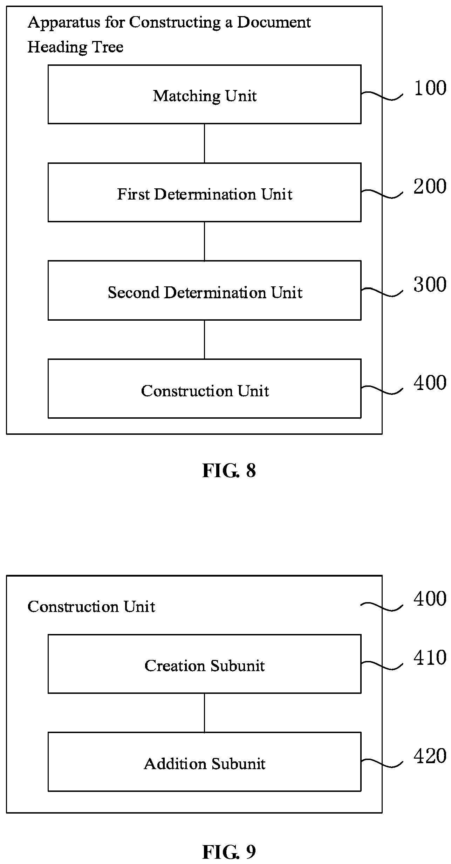

FIG. 8 is a schematic diagram of an apparatus for constructing a document heading tree according to an embodiment of the present disclosure. As illustrated in FIG. 8, an apparatus for constructing a document heading tree according to an embodiment of the present disclosure includes:

a matching unit 100 configured to perform a rule matching between a text feature of each of paragraphs in a document to be processed and a paragraph feature in a predefined rule, according to the predefined rule;

a first determination unit 200 configured to determine a paragraph level of each of the paragraphs in the document to be processed according to a result of the rule matching, in a case where the rule matching is successful;

a second determination unit 300 configured to determine a paragraph level of each of the paragraphs in the document to be processed using a machine learning model, in a case where the rule matching is failed; and

a construction unit 400 configured to construct a document heading tree of the document to be processed based on the paragraph level of each of the paragraphs.

In one implementation, the machine learning model includes a long short-term memory network model; and the second determination unit 300 is configured to:

extract a word vector sequence feature and a part-of-speech sequence feature from a current paragraph;
input the word vector sequence feature and the part-of-speech sequence feature into the machine learning model; and
output, by the machine learning model, the paragraph level of each of the paragraphs in the document to be processed.

In one implementation, the paragraph feature in the predefined rule includes a document main body feature; the first determination unit 200 is configured to determine a paragraph level of a current paragraph as a document main body, in a case where the current paragraph in the document to be processed is successfully matched with the document main body feature.

In one implementation, the paragraph feature in the predefined rule includes a format of a digital symbol preceding a heading content of a document heading;
the first determination unit 200 is configured to:

in a case where it is recognized that a digital symbol precedes a heading content of a document heading, obtain a heading level set composed of respective heading levels based on a sample document, and obtain regular expressions of formats of digital symbols corresponding to the respective heading levels; and
match the format of the digital symbol preceding the heading content in a current paragraph with the regular expressions corresponding to the respective heading levels, and determine a heading level of the current paragraph according to a matching result.

In one implementation, the paragraph feature in the predefined rule includes a keyword set which includes a blacklist and a whitelist, wherein the whitelist includes a keyword which is included in the document heading, and the blacklist includes a keyword which is not included in the document heading;
the first determination unit 200 is configured to:

match a text of a current paragraph with the keyword set;
determine a paragraph level of the current paragraph as a preset heading level corresponding to the whitelist, in a case where the text of the current paragraph is successfully matched with the whitelist; and
determine the paragraph level of the current paragraph as a document main body, in a case where the text of the current paragraph is successfully matched with the blacklist.

FIG. 9 is a schematic diagram of a construction unit of an apparatus for constructing a document heading tree according to another embodiment of the present disclosure. As illustrated in FIG 9, in one implementation, the construction unit 400 includes:

a creation subunit 410 configured to create a root node of the document heading tree, and assign a paragraph level corresponding to the root node as a highest level; and
an addition subunit 420 configured to add a paragraph node corresponding to each of the paragraphs into the document heading tree according to the paragraph level of each of the paragraphs in the document to be processed.

In one implementation, the addition subunit 420 is configured to:

take a first paragraph in the document to be processed as a current paragraph, and take the root node as a last node of the document heading tree;
compare a paragraph level of the current paragraph with that of the last node;
add a paragraph node corresponding to the current paragraph into the document heading tree according to a comparison result;
take a next paragraph of the current paragraph as a new current paragraph, and take a paragraph node corresponding to the current paragraph as a new last node; and
for the new current paragraph and the new last node, repeat comparing a paragraph level of the current paragraph with that of the last node, and adding a paragraph node corresponding to the current paragraph into the document heading tree according to a comparison result.

In one implementation, the addition subunit 420 is configured to:

in a case where the paragraph level of the current paragraph is higher than that of the last node, take a parent node of the last node as a new last node, and repeat comparing a paragraph level of the current paragraph with that of the last node; and
in a case where the paragraph level of the current paragraph is lower than that of the last node, take a paragraph node corresponding to the current paragraph as a child node of the last node.

For the functions of respective modules in each apparatus according to the embodiment of the present disclosure, please refer to corresponding descriptions in the above method, and they will not be repeated here.

According to an embodiment of the present disclosure, the present disclosure further provides an electronic device and a readable storage medium.

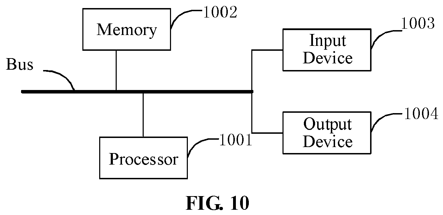

As illustrated in FIG. 10, which is a block diagram of an electronic device for implementing a method for constructing a document heading tree according to an embodiment of the present disclosure. The electronic device is intended to represent various forms of digital computers, such as a laptop computer, a desktop computer, a workstation, a personal digital assistant, a server, a blade server, a mainframe computer, and any other suitable computer. The electronic devices may also represent various forms of mobile apparatuses, such as a personal digital assistant, a cellular phone, a smart phone, a wearable device and any other similar computing apparatus. The components illustrated herein, their connections and relationships, and their functions are merely examples, and are not intended to limit the implementation of the present disclosure described and/or claimed herein.

As illustrated in FIG. 10, the electronic device includes one or more processors 1001, a memory 1002, and interfaces for connecting various components, including a high-speed interface and a low-speed interface. The various components are connected to each other by different buses, and may be mounted on a common main board or in other ways as needed. The processor may process instructions performed within the electronic device, including instructions stored in or on the memory to display GUI graphical information on an external input/output device (e.g., a display device coupled to an interface). In other implementations, a plurality of processors and/or a plurality of buses may be used with a plurality of memories together, if necessary. Similarly, a plurality of electronic devices may be connected, and each device provides some necessary operations (e.g., acting as a server array, a group of blade servers, or a multi-processor system). In FIG. 10, one processor 1001 is taken as an example.

The memory 1002 is a non-transitory computer-readable storage medium provided in the present disclosure. The memory stores instructions executable by at least one processor, so that the at least one processor can execute a method for constructing a document heading tree provided by the present disclosure. The non-transitory computer-readable storage medium of the present disclosure stores a computer instruction for enabling a computer to execute the method for constructing a document heading tree provided by the present disclosure.

As a non-transitory computer readable storage medium, the memory 1002 may be configured to store a non-transitory software program, a non-transitory computer executable program and modules, such as program instructions/modules corresponding to the method for constructing the document heading tree in the embodiment of the present disclosure (for example, the matching unit 100, the first determination unit 200, the second determination unit 300 and the construction unit 400 illustrated in FIG 8, and the creation subunit 410 and the addition subunit 420 illustrated in FIG. 9). The processor 1001 executes various functional applications and data processing of the server by running the non-transitory software programs, instructions and modules stored in the memory 1002, that is, realizes the method for constructing the document heading tree in the above method embodiments.

The memory 1002 can include a program storage area and a data storage area, wherein the program storage area can store an operating system and an application program required by at least one function; and the data storage area can store data created according to the use of the electronic device for the construction of the document heading tree, etc. In addition, the memory 1002 may include a high-speed random access memory, and may also include a non-transitory memory, such as at least one magnetic disk memory device, a flash memory device, or any other non-transitory solid memory device. In some embodiments, the memory 1002 optionally includes memories remotely located relative to the processor 1001, and these remote memories may be connected to the electronic device for the construction of the document heading tree through a network. Examples of the network include, but are not limited to, the Internet, an intranet, a local area network, a mobile communication network and combinations thereof.

The electronic device for the method for constructing the document heading tree may further include: an input device 1003 and an output device 1004. The processor 1001, the memory 1002, the input device 1003, and the output device 1004 may be connected by buses or other means, and the bus connection is taken as an example in FIG. 10.

The input device 1003 may receive input digital or character information, and generate a key signal input related to a user setting and a function control of the electronic device for the construction of the document heading tree. The input device for example may be a touch screen, a keypad, a mouse, a track pad, a touch pad, an indicator stick, one or more mouse buttons, a trackball, a joystick, etc. The output device 1004 may include a display device, an auxiliary lighting apparatus (e.g., LED), a haptic feedback apparatus (e.g., vibration motor), etc. The display device may include, but is not limited to, a liquid crystal display (LCD), a light emitting diode (LED) display, and a plasma display. In some embodiments, the display device may be a touch screen.

Various embodiments of the system and technology described here may be implemented in a digital electronic circuit system, an integrated circuit system, an application specific integrated circuit (ASIC), computer hardware, firmware, software, and/or combinations thereof. These various embodiments may be implemented in one or more computer programs that may be executed and/or interpreted on a programmable system including at least one programmable processor, which may be a dedicated or general programmable processor and capable of receiving and transmitting data and instructions from and to a storage system, at least one input device, and at least one output device.

These computing programs (also called as programs, software, software applications, or codes) include machine instructions of the programmable processor, and may be implemented with advanced process and/or object-oriented programming language, and/or assembly/machine language. As used herein, the terms "machine-readable medium" and "computer-readable medium" refer to any computer program product, device, and/or apparatus (e. g., magnetic disk, optical disk, memory, programmable logic device (PLD)) for providing machine instructions and/or data to the programmable processor, including a machine-readable medium that receives machine instructions as machine-readable signals. The term "machine readable signal" refers to any signal for providing machine instructions and/or data to the programmable processor.

In order to provide an interaction with a user, the system and technology described here may be implemented on a computer having: a display device (e. g., a cathode ray tube (CRT) or a liquid crystal display (LCD) monitor) for displaying information to the user; and a keyboard and a pointing device (e. g., a mouse or a trackball), through which the user can provide an input to the computer. Other kinds of devices can also provide an interaction with the user. For example, a feedback provided to the user may be any form of sensory feedback (e.g., visual feedback, auditory feedback, or tactile feedback); and an input from the user may be received in any form, including an acoustic input, a voice input or a tactile input.

The system and technology described here may be embodied in a computing system including background components (e.g., acting as a data server), a computing system including middleware components (e.g., an application server), or a computing system including front-end components (e.g., a user computer with a graphical user interface or a web browser, through which the user can interact with the embodiments of the system and technology described here), or a computing system including any combination of such background components, middleware components, or front-end components. The components of the system may be connected to each other through a digital data communication in any form or medium (e.g., a communication network). Examples of the communication network include a local area network (LAN), a wide area network (WAN), and the Internet.

A computer system may include a client and a server. The client and the server are generally remote from each other and usually interact through a communication network. The relationship between the client and the server is generated by computer programs running on corresponding computers and having a client-server relationship with each other.

The embodiments of the present disclosure are suitable for the heading recognition of various unstructured documents and the construction of the document heading tree, and has a strong fault tolerance based on the combination of the predefined rule and the machine learning model, so that the recognition result is more accurate.

It should be understood that the steps can be reordered, added or deleted using the various flows illustrated. For example, the steps described in the present disclosure may be performed concurrently, sequentially or in a different order, so long as the desired result of the technical solution disclosed in the present disclosure can be achieved, and there is no limitation herein.

The specific embodiments do not limit the protection scope of the present disclosure. It should be understood by those skilled in the art that various modifications, combinations, sub-combinations and substitutions can be made according to the design requirements and other factors. Any modification, equivalent substitution and improvement under the spirit and principle of the present disclosure should fall within the protection scope of the present disclosure.

**Claims**

1. A method for constructing a document heading tree, comprising:

    Performing (S112) a rule matching between a text feature of each of paragraphs in a document to be processed and a paragraph feature in a predefined rule, according to the predefined rule;
    determining (S114) a paragraph level of each of the paragraphs in the document to be processed according to a result of the rule matching, in a case where the rule matching is successful;
    determining (S116) a paragraph level of each of the paragraphs in the document to be processed using a machine learning model, in a case where the rule matching is failed; and
    constructing (S120) a document heading tree of the document to be processed based on the paragraph level of each of the paragraphs.

2. The method according to claim 1, wherein the machine learning model comprises a long short-term memory network model; the determining (S116) a paragraph level of each of the paragraphs in the document to be processed using a machine learning model, in a case where the rule matching is failed comprises:

    extracting (S310) a word vector sequence feature and a part-of-speech sequence feature from a current paragraph;
    inputting (S320) the word vector sequence feature and the part-of-speech sequence feature into the machine learning model; and
    outputting (S330), by the machine learning model, the paragraph level of each of the paragraphs in the document to be processed.

3. The method according to claim 1 or 2, wherein the paragraph feature in the predefined rule comprises a document main body feature;
the determining (S114) a paragraph level of each of the paragraphs in the document to be processed according to a result of the rule matching, in a case where the rule matching is successful comprises: determining a paragraph level of a current paragraph as a document main body, in a case where the current paragraph in the document to be processed is successfully matched with the document main body feature.

4. The method according to any one of claims 1 to 3, wherein the paragraph feature in the predefined rule comprises a format of a digital symbol preceding a heading content of a document heading;
the determining (S114) a paragraph level of each of the paragraphs in the document to be processed according to a result of the rule matching, in a case where the rule matching is successful comprises:

    in a case where it is recognized that a digital symbol precedes a heading content of a document heading, obtaining a heading level set composed of respective heading levels based on a sample document, and obtaining regular expressions of formats of digital symbols corresponding to the respective heading levels; and
    matching the format of the digital symbol preceding the heading content in a current paragraph with the regular expressions corresponding to the respective heading levels, and determining a heading level of the current paragraph according to a matching result.

5. The method according to any one of claims 1 to 4, wherein the paragraph feature in the predefined rule comprises a keyword set which includes a blacklist and a whitelist, wherein the whitelist comprises a keyword which is included in a document heading, and the blacklist comprises a keyword which is not included in the document heading; the determining (S 114) a paragraph level of each of the paragraphs in the document to be processed according to a result of the rule matching, in a case where the rule matching is successful comprises:

matching a text of a current paragraph with the keyword set;
determining a paragraph level of the current paragraph as a preset heading level corresponding to the whitelist, in a case where the text of the current paragraph is successfully matched with the whitelist; and
determining the paragraph level of the current paragraph as a document main body, in a case where the text of the current paragraph is successfully matched with the blacklist.

6. The method according to any one of claims 1 to 5, wherein the constructing a document heading tree of the document to be processed based on the paragraph level of each of the paragraphs comprises:

creating a root node of the document heading tree, and assigning a paragraph level corresponding to the root node as a highest level; and
adding a paragraph node corresponding to each of the paragraphs into the document heading tree according to the paragraph level of each of the paragraphs in the document to be processed;
optionally, the adding a paragraph node corresponding to each of the paragraphs into the document heading tree according to the paragraph level of each of the paragraphs in the document to be processed comprises:

taking (S510) a first paragraph in the document to be processed as a current paragraph, and taking the root node as a last node of the document heading tree;
comparing (S520) a paragraph level of the current paragraph with that of the last node;
adding (S530) a paragraph node corresponding to the current paragraph into the document heading tree according to a comparison result;
taking (S540) a next paragraph of the current paragraph as a new current paragraph, and taking a paragraph node corresponding to the current paragraph as a new last node; and
for the new current paragraph and the new last node, repeating (S550) the comparing a paragraph level of the current paragraph with that of the last node and the adding a paragraph node corresponding to the current paragraph into the document heading tree according to a comparison result;

optionally, the adding (S530) a paragraph node corresponding to the current paragraph into the document heading tree according to a comparison result comprises:

in a case where the paragraph level of the current paragraph is higher than that of the last node, taking a parent node of the last node as a new last node, and repeating the comparing a paragraph level of the current paragraph with that of the last node; and
in a case where the paragraph level of the current paragraph is lower than that of the last node, taking a paragraph node corresponding to the current paragraph as a child node of the last node.

7. An apparatus for constructing a document heading tree, comprising:

a matching unit (100) configured to perform a rule matching between a text feature of each of paragraphs in a document to be processed and a paragraph feature in a predefined rule, according to the predefined rule;
a first determination unit (200) configured to determine a paragraph level of each of the paragraphs in the document to be processed according to a result of the rule matching, in a case where the rule matching is successful;
a second determination unit (300) configured to determine a paragraph level of each of the paragraphs in the document to be processed using a machine learning model, in a case where the rule matching is failed; and
a construction unit (400) configured to construct a document heading tree of the document to be processed based on the paragraph level of each of the paragraphs.

8. The apparatus according to claim 7, wherein the machine learning model comprises a long short-term memory network model; and the second determination unit (300) is configured to:

extract a word vector sequence feature and a part-of-speech sequence feature from a current paragraph;

input the word vector sequence feature and the part-of-speech sequence feature into the machine learning model; and

output, by the machine learning model, the paragraph level of each of the paragraphs in the document to be processed.

9. The apparatus according to claim 7 or 8, wherein the paragraph feature in the predefined rule comprises a document main body feature;

the first determination unit (200) is configured to determine a paragraph level of a current paragraph as a document main body, in a case where the current paragraph in the document to be processed is successfully matched with the document main body feature.

10. The apparatus according to any one of claims 7 to 9, wherein the paragraph feature in the predefined rule comprises a format of a digital symbol preceding a heading content of a document heading;

the first determination unit (200) is configured to:

in a case where it is recognized that a digital symbol precedes a heading content of a document heading, obtain a heading level set composed of respective heading levels based on a sample document, and obtain regular expressions of formats of digital symbols corresponding to the respective heading levels; and

match the format of the digital symbol preceding the heading content in a current paragraph with the regular expressions corresponding to the respective heading levels, and determine a heading level of the current paragraph according to a matching result.

11. The apparatus according to any one of claims 7 to 10, wherein the paragraph feature in the predefined rule comprises a keyword set which includes a blacklist and a whitelist, wherein the whitelist comprises a keyword which is included in a document heading, and the blacklist comprises a keyword which is not included in the document heading;

the first determination unit (200) is configured to:

match a text of a current paragraph with the keyword set;

determine a paragraph level of the current paragraph as a preset heading level corresponding to the whitelist, in a case where the text of the current paragraph is successfully matched with the whitelist; and

determine the paragraph level of the current paragraph as a document main body, in a case where the text of the current paragraph is successfully matched with the blacklist.

12. The apparatus according to any one of claims 7 to 11, wherein the construction unit (400) comprises:

a creation subunit (410) configured to create a root node of the document heading tree, and assign a paragraph level corresponding to the root node as a highest level; and

an addition subunit (420) configured to add a paragraph node corresponding to each of the paragraphs into the document heading tree according to the paragraph level of each of the paragraphs in the document to be processed;

optionally, the addition subunit (420) is configured to:

take a first paragraph in the document to be processed as a current paragraph, and take the root node as a last node of the document heading tree;

compare a paragraph level of the current paragraph with that of the last node;

add a paragraph node corresponding to the current paragraph into the document heading tree according to a comparison result;

take a next paragraph of the current paragraph as a new current paragraph, and take a paragraph node corresponding to the current paragraph as a new last node; and

for the new current paragraph and the new last node, repeat comparing a paragraph level of the current paragraph with that of the last node, and adding a paragraph node corresponding to the current paragraph into the document heading tree according to a comparison result;

optionally, the addition subunit (420) is configured to:

in a case where the paragraph level of the current paragraph is higher than that of the last node, take a parent node of the last node as a new last node, and repeat comparing a paragraph level of the current paragraph with that of the last node; and

in a case where the paragraph level of the current paragraph is lower than that of the last node, take a paragraph node corresponding to the current paragraph as a child node of the last node.

13. An electronic device, comprising:

    at least one processor (1001); and
    a memory (1002) communicatively connected to the at least one processor (1001); wherein
    the memory (1002) stores instructions executable by the at least one processor (1001), the instructions, when executed by the at least one processor (1001), cause the at least one processor (1001) to perform the method according to any one of claims 1 to 6.

14. A non-transitory computer readable storage medium which stores computer instructions, wherein the computer instructions, when executed by a computer, cause the computer to execute the method according to any one of claims 1 to 6.

15. A computer program product, comprising computer program instructions, the computer program instructions, when executed by a computer, cause the computer to perform the method according to any one of claims 1-6.

Performing a rule matching between a text feature of each of paragraphs in a document to be processed and a paragraph feature in a predefined rule, according to the predefined rule ⌐ S112

Determining a paragraph level of each of the paragraphs in the document to be processed according to a result of the rule matching, in a case where the rule matching is successful S114

Determining a paragraph level of each of the paragraphs in the document to be processed using a machine learning model, in a case where the rule matching is failed ⌐ S116

Constructing a document heading tree of the document to be processed based on the paragraph level of each of the paragraphs ⌐ S120

**FIG. 1**

Example of an input document

**1. Task introduction**

The task of constructing a document heading tree requires giving structure information of corresponding headings according to a given document, as illustrated in the following drawing ...

**2. Algorithm design**

**2.1 Rule matching**

Firstly, a current input paragraph is preliminarily determined in a method using a rule, and rule matching includes three steps, i.e., restriction matching, digit matching and keyword matching

Document heading tree

ROOT:Document

T:1.Task introduction

T:2. Algorithm design

C:The task of constructing a document heading tree requires ...

T:2.1 Rule matching

C:Firstly, ... a method using a rule ...

**FIG. 2**

Heading format restriction based on a document main body feature —Ineffective→ Heading digit matching

Heading format restriction based on a document main body feature —Effective→ Determination of a document main body, output of a weight value

Heading digit matching —Ineffective→ Keyword matching

Heading digit matching —Effective→ Determination of a document heading, output of a corresponding weight value

Keyword matching —Ineffective→ Machine learning model

Keyword matching —Effective→ Determination of a document heading or a document main body, output of a corresponding weight value

**FIG. 3**

Extracting a word vector sequence feature and a part-of-speech sequence feature from a current paragraph — S310

Inputting the word vector sequence feature and the part-of-speech sequence feature into the machine learning model — S320

Outputting, by the machine learning model, the paragraph level of each of the paragraphs in the document to be processed — S330

**FIG. 4**

| | |
|---|---|
| Taking a first paragraph in the document to be processed as a current paragraph, and taking the root node as a last node of the document heading tree | S510 |

↓

| | |
|---|---|
| Comparing a paragraph level of the current paragraph with that of the last node | S520 |

↓

| | |
|---|---|
| Adding a paragraph node corresponding to the current paragraph into the document heading tree according to a comparison result | S530 |

↓

| | |
|---|---|
| Taking a next paragraph of the current paragraph as a new current paragraph, and taking a paragraph node corresponding to the current paragraph as a new last node | S540 |

↓

| | |
|---|---|
| For the new current paragraph and the new last node, repeating the comparing a paragraph level of the current paragraph with that of the last node, and the adding a paragraph node corresponding to the current paragraph into the document heading tree according to a comparison result | S550 |

**FIG. 5**

```
                    ROOT:0
                   /      \
            NODE1:1        NODE3:1
               |              |
          NODE2:100      NODE4:100
```

**FIG. 6**

**FIG. 7**

Apparatus for Constructing a Document
Heading Tree

| Matching Unit | 100 |

| First Determination Unit | 200 |

| Second Determination Unit | 300 |

| Construction Unit | 400 |

**FIG. 8**

Construction Unit — 400

| Creation Subunit | 410 |

| Addition Subunit | 420 |

**FIG. 9**

FIG. 10

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 298 357 B1 (WEXLER MICHAEL C [US] ET AL) 2 October 2001 (2001-10-02) * the whole document * | 1-15 | INV. G06F40/258 G06N20/00 G06K9/00 G06N5/02 ADD. G06N3/04 |
| A | Bitew Semere Kiros: "Logical Structure Extraction of Electronic Documents Using Contextual Information", , 1 August 2018 (2018-08-01), XP055832237, Retrieved from the Internet: URL:https://essay.utwente.nl/76427/1/BITEW_MA_EEMCS.pdf [retrieved on 2021-08-16] * the whole document * | 1-15 | |
| A | He Yi: "Extracting Document Structure of a Text with Visual and Textual Cues", , 1 July 2017 (2017-07-01), XP055832241, Retrieved from the Internet: URL:https://essay.utwente.nl/72979/1/Yi%20He%20-%20master%20thesis%20-%20final%20version.pdf [retrieved on 2021-08-16] * the whole document * | 1-15 | TECHNICAL FIELDS SEARCHED (IPC) G06F G06N G06K |

The present search report has been drawn up for all claims

| Place of search | Date of completion of the search | Examiner |
|---|---|---|
| Berlin | 18 August 2021 | Lechenne, Laurence |

EPO FORM 1503 03.82 (P04C01)

## ANNEX TO THE EUROPEAN SEARCH REPORT
## ON EUROPEAN PATENT APPLICATION NO.

EP 21 16 4267

This annex lists the patent family members relating to the patent documents cited in the above-mentioned European search report.
The members are as contained in the European Patent Office EDP file on
The European Patent Office is in no way liable for these particulars which are merely given for the purpose of information.

18-08-2021

| Patent document cited in search report | | Publication date | Patent family member(s) | Publication date |
|---|---|---|---|---|
| US 6298357 | B1 | 02-10-2001 | NONE | |

EPO FORM P0459

For more details about this annex : see Official Journal of the European Patent Office, No. 12/82